# EUROPÄISCHE PATENTSCHRIFT

(11) **EP 2 958 739 B1**
(45) Veröffentlichungstag und Bekanntmachung des Hinweises auf die Patenterteilung: **21.11.2018**
(21) Anmeldenummer: 14713360.7
(22) Anmeldetag: 07.02.2014
(51) Int. Cl.: B29D 30/32, B29D 30/24

(54) **VERFAHREN UND VORRICHTUNG ZUR HERSTELLUNG VON REIFENROHLINGEN**
METHOD AND DEVICE FOR PRODUCING GREEN TIRES
PROCÉDÉ ET DISPOSITIF PERMETTANT LA FABRICATION D'ÉBAUCHES DE PNEUMATIQUES

(30) Priorität: 22.02.2013 DE 102013003431
(43) Veröffentlichungstag der Anmeldung: 30.12.2015
(73) Patentinhaber: Harburg-Freudenberger Maschinenbau GmbH, 21079 Hamburg (DE)
(72) Erfinder: LANGE, Thomas, 21037 Hamburg (DE); BEHRENS, Achim, 21271 Asendorf (DE)
(74) Vertreter: Klickow & Wetzel PartGmbB
(86) Internationale Anmeldenummer: PCT/DE2014/000054
(87) Internationale Veröffentlichungsnummer: WO 2014/146632

(56) Entgegenhaltungen:
- EP-A1- 0 004 715
- EP-A1- 1 537 986
- WO-A1-2010/064084
- DE-A1- 2 140 923
- DE-A1-102009 025 759
- DE-B- 1 159 163
- FR-A- 1 339 492
- FR-A1- 2 228 602
- JP-A- S6 092 837
- JP-A- S59 230 736
- US-A- 3 853 653

## Beschreibung

Die Erfindung betrifft ein Verfahren zur Herstellung eines Reifenrohlings, bei dem mindestens zwei streifenförmige Materialien auf einer Reifenaufbautrommel positioniert werden und bei dem mindestens zwei Kerne gesetzt werden sowie bei dem die Reifenaufbautrommel sowohl mit einer Kernklemmung als auch mit einer Kernfixierung versehen wird.

Die Erfindung betrifft darüber hinaus eine Vorrichtung zur Herstellung eines Reifenrohlings, bei der mindestens zwei streifenförmige Materialien auf einer Reifenaufbautrommel positioniert werden und bei der mindestens zwei Kerne gesetzt werden sowie bei dem die Reifenaufbautrommel sowohl mit einer Kernklemmung als auch mit einer Kernfixierung versehen wird.

Bei der Herstellung von Reifenrohlingen werden streifenförmige Materialien auf einer Reifenaufbautrommel positioniert. In die elastomeren Materialien sind häufig fadenförmige Materialien zur Verstärkung eingelegt. In seitlichen Bereichen wird jeweils ein Kern zur Verstärkung gesetzt.

Aus der WO 2010/064084 A1 ist bereits ein Verfahren zur Herstellung eines Reifenrohlings bekannt, bei dem streifenförmige Materialien auf einer Reifenaufbautrommel positioniert werden. Weitere Verfahren und Vorrichtungen zur Herstellung von Reifenrohlingen werden auch in der JP S6092837 A, der JP S59230736 A sowie der FR 2228602 A1 offenbart. In der DE 21 40 923 A1 wird ein Verfahren zur Herstellung eines Reifenrohlings unter Verwendung einer Reifenaufbautrommel mit Kernsetzung, Kernklemmung und Kernfixierung beschrieben. Eine weitere Reifenaufbautrommel ist aus der Patentschrift US 3,853,653 bekannt.

Gemäß dem bekannten Stand der Technik wird das verwendete Material auf eine Vorrichtung aufgelegt, die aus Mittel- und Seitenteilen besteht. Verwendete Kerne werden positioniert und von innen geklemmt. Die Innenseite der Kerne wird durch eine Schulter abgestützt und die Kernklemmung bleibt während des gesamten Prozesses aktiv. Durch diese permanente Kernklemmung ist ein Lagenumschlag nur nach oben möglich.

Ein weiterer Nachteil des Standes der Technik besteht darin, dass eine Fadenlänge zwischen den Kernen nicht eindeutig festliegt. Es besteht darüber hinaus keine Möglichkeit, das Material unter den Kern zu arbeiten.

Bislang können die Anforderungen an die Genauigkeit bei der Positionierung der Kerne noch nicht in völlig zufriedenstellender Weise gelöst werden.

Aufgabe der vorliegenden Erfindung ist es ein Verfahren der einleitend genannten Art derart zu verbessern, dass die Positioniergenauigkeit erhöht wird.

Diese Aufgabe wird erfindungsgemäß dadurch gelöst, dass die Reifenaufbautrommel aus einem Mittelteil und zwei beidseitig neben dem Mittelteil angeordneten Trommelhälften ausgebildet ist, dass die Trommelhälften in einer axialen Richtung positionierbar sind und dass das Mittelteil in einer radialen Richtung mit einem veränderlichen Durchmesser versehen ist und dass die Trommelhälften sowie eine Center-Vorrichtung zur Ausbildung eines Freiraumes positionierbar sind, wobei die Kernfixierung vor einem Setzen der Kerne expandiert wird und die Center-Vorrichtung nach außen hebt, sodass die Materialien durch das Ausfahren der Center-Vorrichtung vorgespannt werden, wobei die Kerne nach deren Setzen durch die expandierende Kernklemmung von unten geklemmt werden, wobei die Kerne durch ein Expandieren der Kernfixierung vollständig fixiert werden, bevor das komplette Karkasspaket mit Druck beaufschlagt wird und sich in der Mitte anhebt.

Weitere Aufgabe der Erfindung ist es, eine Vorrichtung der einleitend genannten Art derart zu konstruieren, dass eine erhöhte Positioniergenauigkeit erreicht wird.

Diese Aufgabe wird erfindungsgemäß dadurch gelöst, dass die Reifenaufbautrommel aus einem Mittelteil und zwei beidseitig neben dem Mittelteil angeordneten Trommelhälften ausgebildet ist, dass die Trommelhälften in einer axialen Richtung positionierbar sind und dass das Mittelteil in einer radialen Richtung mit einem veränderlichen Durchmesser versehen ist und dass die Trommelhälften sowie eine Center-Vorrichtung zur Ausbildung eines Freiraumes positionierbar sind, wobei die Kernfixierung vor einem Setzen der Kerne expandiert und die Center-Vorrichtung nach außen hebt, sodass die Materialien durch das Ausfahren der Center-Vorrichtung vorgespannt werden, wobei die Kerne nach deren Setzen durch die expandierende Kernklemmung von unten geklemmt werden, wobei die Kerne durch ein Expandieren der Kernfixierung vollständig fixiert werden, bevor das komplette Karkasspaket mit Druck beaufschlagt wird und sich in der Mitte anhebt.

Erfindungsgemäß ist insbesondere vorgesehen, dass die Reifenaufbautrommel aus einem Mittelteil und zwei beidseitig neben dem Mittelteil angeordneten Trommelhälften ausgebildet wird, dass die Trommelhälften in einer axialen Richtung positionierbar sind, dass das Mittelteil in einer radialen Richtung mit einem veränderlichen Durchmesser versehen wird und dass eine radiale Durchmesservergrößerung des Mittelteiles vor Einsetzen der Kerne durchgeführt wird.

Insbesondere ist daran gedacht, dass die beiden Trommelhälften unabhängig voneinander verfahrbar sind. Die Positionierung kann unter Verwendung mindestens eines Servomotors durchgeführt werden.

Vor dem Einsetzen der Kerne wird das Mittelteil in einer radialen Richtung expandiert und das streifenförmige Material auf der Reifenaufbautrommel wird hierdurch gespannt. Anschließend können die Kernsetzer die Kerne gegen die Seitenflanken des expandierten Mittelteiles drücken und dort fixieren.

Das erfindungsgemäße Verfahren ermöglicht es insbesondere, zwischen den Kernen sehr gleichmäßige Fadenlängen bereitzustellen. Dies unterstützt eine runde Ausbildung der Reifen und eine gleichmäßige Materialverteilung.

Die voneinander unabhängige Positionierbarkeit der Trommelhälften ermöglicht es, bei einem einstufigen Aufbau mit Hilfe von Andruckvorrichtungen zwischen die Seitenteile und das Mittelteil zu fahren. Der Reifenrohling kann hierdurch im Seitenwandbereich geformt werden, ohne das ein Wechsel auf eine andere Trommel erforderlich ist.

In den beigefügten Figuren werden die erfindungsgemäßen Verfahrensschritte sowie die erfindungsgemäße Vorrichtung weiter erläutert. Bei den verwendeten Abkürzungen bedeutet "IL" Inner Liner und somit das innere Streifenmaterial, "BP" bedeutet Body Ply und somit das Körpermaterial.

Erfindungsgemäß wird ein grundsätzlich bekannter zweistufiger Prozess in einer einstufigen Maschine umgesetzt.

Durch die Kombination sowohl einer Kernklemmung als auch einer Kernfixierung im Bereich der Reifenaufbautrommel wird eine deutlich verbesserte Wiederholgenauigkeit bei der Reifenherstellung erreicht.

Die Kombination der Kernklemmung sowie der Kernfixierung ermöglicht es ebenfalls, in einem einstufigen Verfahren Reifen herzustellen, die ansonsten nur in einem zweistufigen Verfahren produzierbar sind.

Insbesondere ist es durch die erfindungsgemäße Merkmalskombination möglich, in einem einstufigen Prozess ein beliebiges Material in die Kerne einzuschlagen.

Beim Verfahren gemäß dem Stand der Technik trat bislang das Problem auf, dass die Kerne beim Bombieren verloren gehen. Gemäß dem erfindungsgemäßen Verfahren und unter Verwendung der erfindungsgemäßen Vorrichtung werden die Kerne nunmehr im Karkassverband gehalten und gehen nicht mehr verloren.

Bislang war der Fachmann davon ausgegangen, dass eine zwei- oder mehrstufige Reifenherstellung zwingend notwendig ist. Erfindungsgemäß wurde erkannte, dass auch eine einstufige Prozessdurchführung möglich ist. Ein wesentlicher erfindungsgemäßer Gedanke besteht somit bereits isoliert darin, einen Reifenherstellungsprozess einstufig zu realisieren.

Zu betonen ist insbesondere auch noch einmal, dass ein wesentlicher erfindungsgemäßer Aspekt darin besteht, dass die Kerne durchgehend fixiert werden.

In den Zeichnungen sind Ausführungsbeispiele der Erfindung schematisch dargestellt. Es zeigen:
- Fig. 1: Eine Seitenansicht einer Reifenaufbautrommel, die mit einer Kernklemmung und einer Kernfixierung ausgestattet ist,
- Fig. 2: ein Längsschnitt durch die Reifenaufbautrommel gemäß Fig. 1,
- Fig. 3: eine schematische Darstellung der Trommel in einem Flachzustand,
- Fig. 4: die Trommel gemäß Fig. 3 in einem Flachzustand mit aufgelegtem Material,
- Fig. 5: die Reifenaufbautrommel mit einer expandierten Kernfixierung und nach außen verschobener Center-Vorrichtung,
- Fig. 6: die Reifenaufbautrommel mit von außen gehaltenen Kernen sowie zur Straffung des Materials gesetzten Kernen,
- Fig. 7: die Reifenaufbautrommel mit von außen gehaltenen und gesetzten Kernen,
- Fig. 8: die Reifenaufbautrommel nach einem erfolgten Lagenumschlag und gesetzten sowie am Mittelteil gehaltenen Kernen,
- Fig. 9: die Reifenaufbautrommel mit einem fest auf dem Mittelteil aufsetzenden Materialpaket,
- Fig. 10: die Reifenaufbautrommel nach einem Umschlagen des Materials bis unter den Kern,
- Fig. 11: die Reifenaufbautrommel mit zusammengefahrenen Trommelhälften,
- Fig. 12: die Reifenaufbautrommel bei einer mit wenig Druck expandierten Kernfixierung und
- Fig. 13: die Reifenaufbautrommel mit einem komplett fixierten Karakaspaket, das mit Druck beaufschlagt wird und sich zur Mitte anhebt,

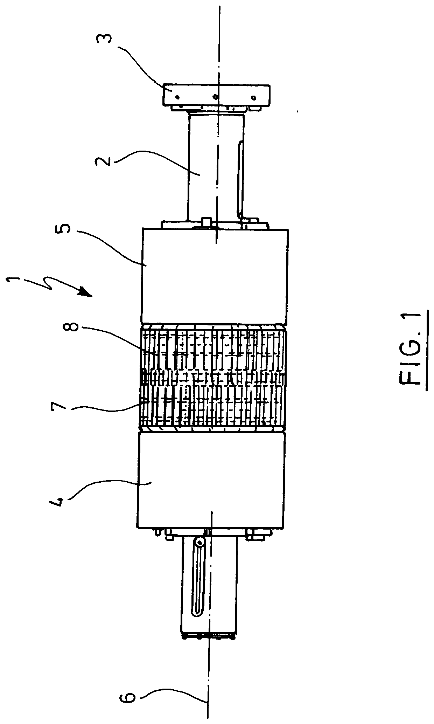

Fig. 1 zeigt eine Reifenaufbautrommel (1) zur Verwendung als Vorrichtung zur Herstellung eines Reifenrohlings. Die Reifenaufbautrommel (1) ist auf einer Welle (2) fixiert. Die Welle (2) ist im Bereich eines Lagers (3) drehbeweglich geführt.

In einer Längsrichtung (6) zwischen den Trommelhälften (4, 5) sind zwei Mittelteile (7, 8) angeordnet.

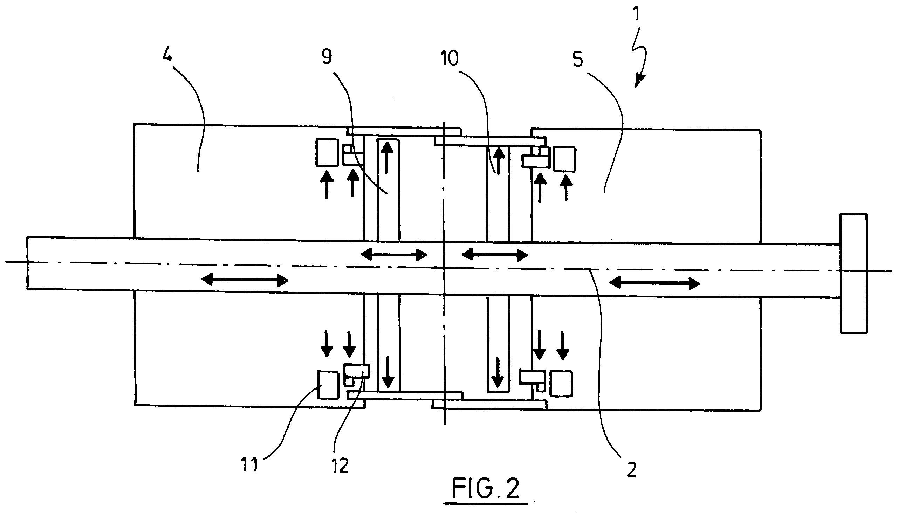

Fig. 2 zeigt einen Längsschnitt durch die Reifenaufbautrommel (1) gemäß Fig. 1. Es ist zu erkennen das die Trommelhälften (4, 5) entlang der Welle (2) verschieblich angeordnet sind. Zwischen den Trommelhälften (4, 5) sind Center-Vorrichtungen (9, 10) angeordnet. Zu erkennen sind darüber hinaus eine Kernklemmung (11) sowie eine Kernfixierung (12). Grundsätzlich läuft der Verfahrensablauf entsprechend der nachfolgend erläuterten Prozessschritte ab. In einem ersten Schritt wird durch ein Ausfahren der Center-Vorrichtung (9, 10) das Material vorgespannt. Anschließend werden die Kerne seitlich gegen die Center-Vorrichtung (9, 10) gesetzt und von innen beklemmt. Das Material wird dabei weiter gestrafft. Anschließend wird das Material auf die Center-Vorrichtung (9, 10) umgeschlagen. In einem abschließenden Prozessschritt wird die Kernklemmung (11) gelöst und die Trommelhälften (4, 5) werden nach außen verfahren.

Durch das Verfahren der Trommelhälften (4, 5) entsteht ein Freiraum zwischen der Center-Vorrichtung (9, 10) und den Trommelhälften (4, 5). Es kann dann weiteres Material aufgelegt werden. Das Material wird dann mit einem Anroller bis unter den Kern umgeschlagen.

In einem nächsten Prozessschritt verfahren die Trommelhälften (4, 5) zur Center-Vorrichtung (9, 10) und die Kernfixierung (12) wird unter den Kern in Position gebracht. Durch die Prozessschritte eines zunächst leichten Expandierens, dann des Zusammenfahrens und anschließend des vollen Expandierens wird im Zusammenwirken mit der Center-Vorrichtung (9, 10) der Kern voll fixiert. Eine Fortsetzung des Prozesses erfolgt in einem erforderlichen Umfang.

Die vorstehend komprimiert erläuterten einzelnen Prozessschritte werden nachfolgend anhand der weiteren Figuren im Detail erläutert.

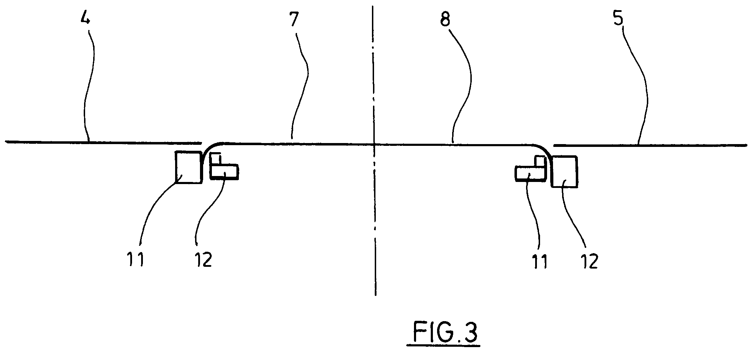

Fig. 3 zeigt die Reifenaufbautrommel (1) in einem Flachzustand. Zu erkennen sind die Trommelhälften (4, 5), die Mittelteile (7, 8) sowie die Kernklemmung (11) und die Kernfixierung (12) .

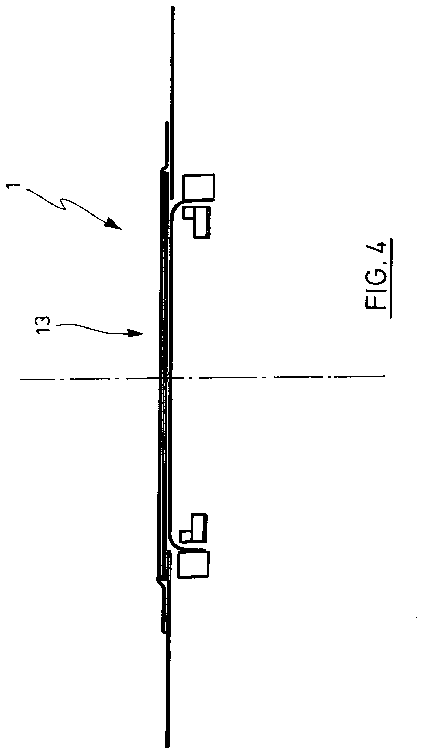

Gemäß Fig. 4 befindet sich die Reifenaufbautrommel (1) weiterhin im Flachzustand. Das Material (13) ist aufgelegt.

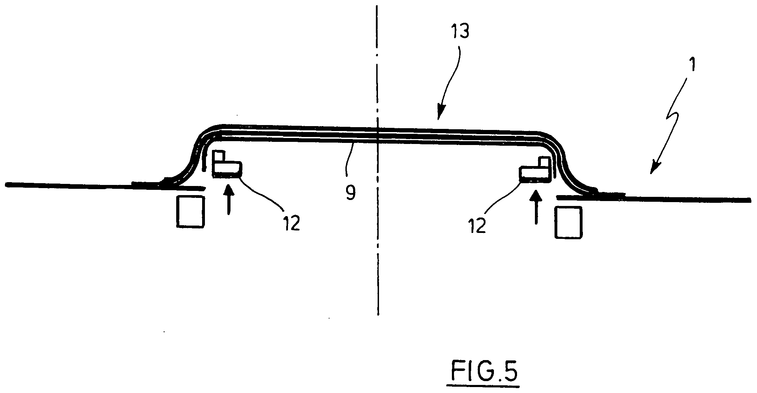

Gemäß dem in Fig. 5 dargestellten Prozessschritt ist die Kernfixierung (12) expandiert und hebt hierbei die Center-Vorrichtung (9) nach außen. Das Material (13) wird hierdurch gestrafft.

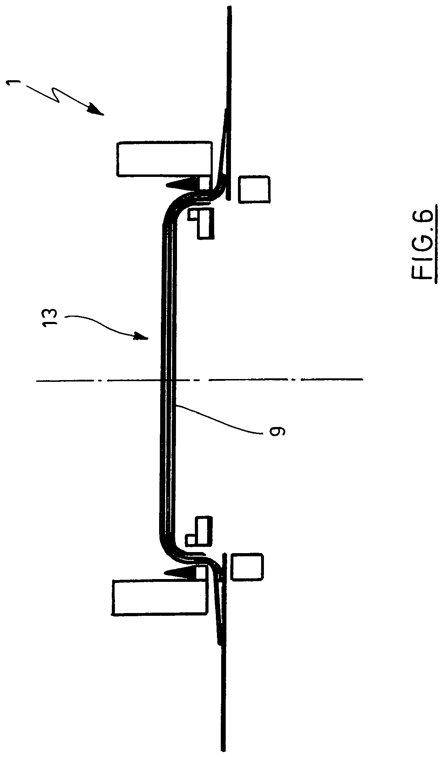

Gemäß den in Fig. 6 dargestellten Prozessschritten sind die Kerne über die Vorrichtung definiert und werden von außen gehalten. Die Kerne sind gesetzt und das Material wird hierdurch weiter gestrafft. Der Kernsetzabstand beziehungsweise der Abstand von Kern zu Kern ist durch die Center-Vorrichtung (9) exakt vorgegeben und somit deutlich definierter als bei Prozessen gemäß dem Stand der Technik.

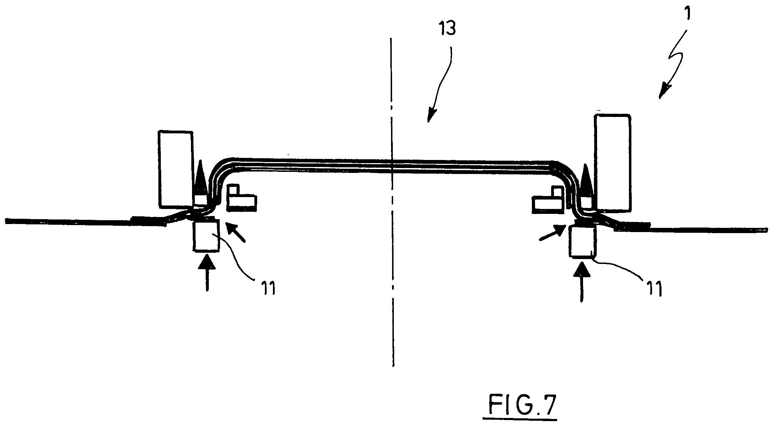

Gemäß dem in Fig. 7 dargestellten Prozessschritt werden die Kerne über die Vorrichtung definiert und von außen gehalten. Die Kerne sind gesetzt und die Kerne werden durch die expandierende Kernklemmung (11) von unten geklemmt. Es wird hierbei ein vorderer Teil eines Balges angehoben und strafft das Material (13) hierdurch nochmals.

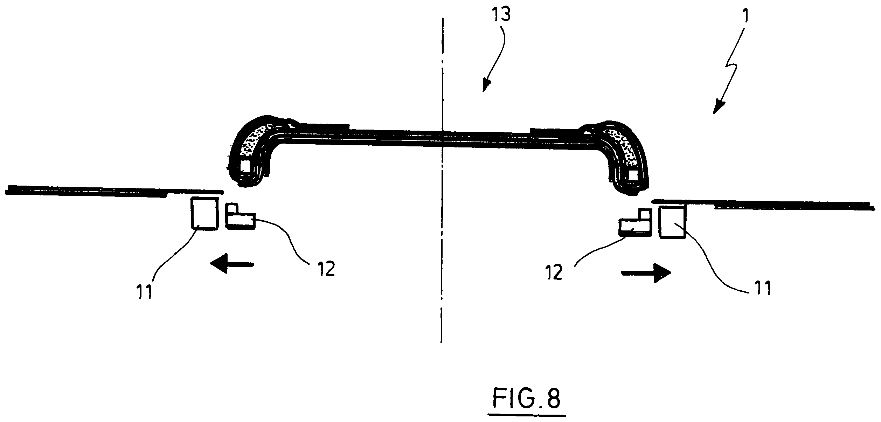

Gemäß dem in Fig. 8 dargestellten Prozessschritt ist der Lagenumschlag erfolgt und die Kerne sind gesetzt und definiert am Mittelteil gehalten. Durch den Materialverbund sitzt das Materialpaket (13) fest auf dem Mittelteil. Die Kernklemmung (11) ist eingefahren und ebenfalls ist die Kernfixierung (12) eingefahren. Die Trommelhälften (4, 5) können auseinanderfahren.

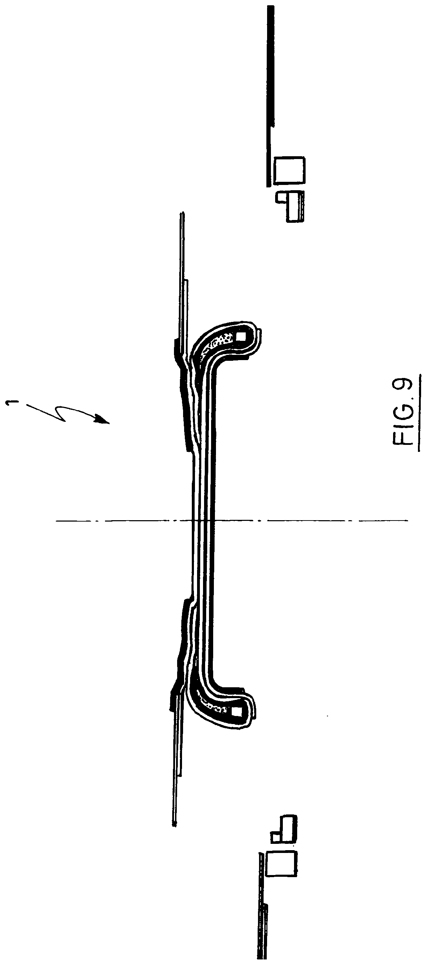

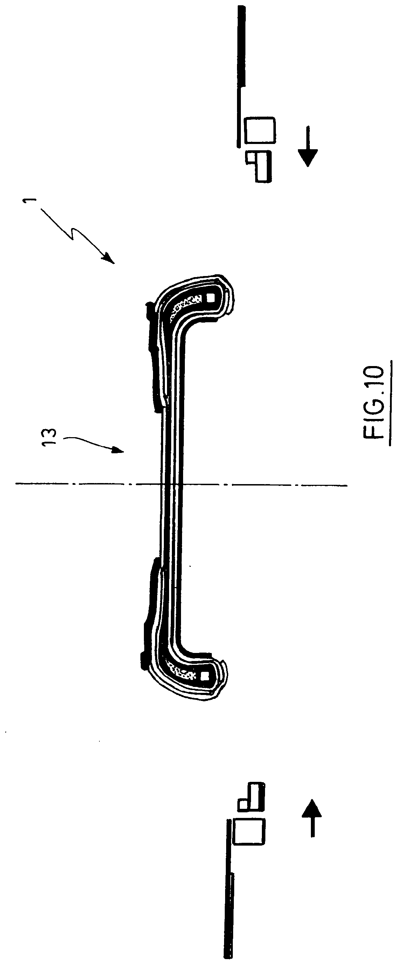

Gemäß dem in Fig. 9 dargestellten Prozessschritt sind die Kerne gesetzt und definiert am Mittelteil gehalten. Durch den Materialverbund sitzt das Materialpaket (13) fest auf dem Mittelteil. Die beiden Trommelhälften (4, 5) sind auseinandergefahren. Es entsteht hierdurch ein Freiraum zwischen den Trommelhälften (4, 5) und der Center-Vorrichtung (9, 10). In einem nächsten Schritt wird das Material aufgelegt.
Gemäß dem in Fig. 10 dargestellten Prozessschritt ist das Material (13) bis unter den Kern umgeschlagen und die beiden Trommelhälften (4, 5) fahren zusammen.

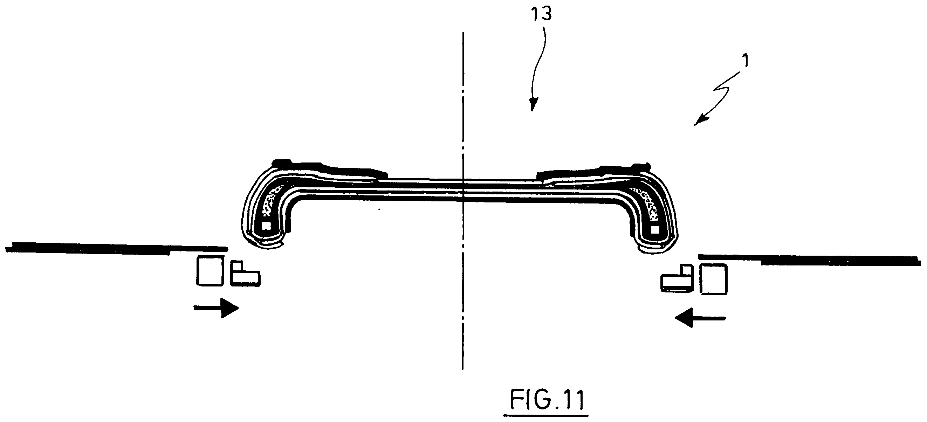

Gemäß dem in Fig. 11 dargestellten Prozessschritt fahren die beiden Trommelhälften (4, 5) zusammen und die Kernfixierung (12) befindet sich in Position unter den Kernen.

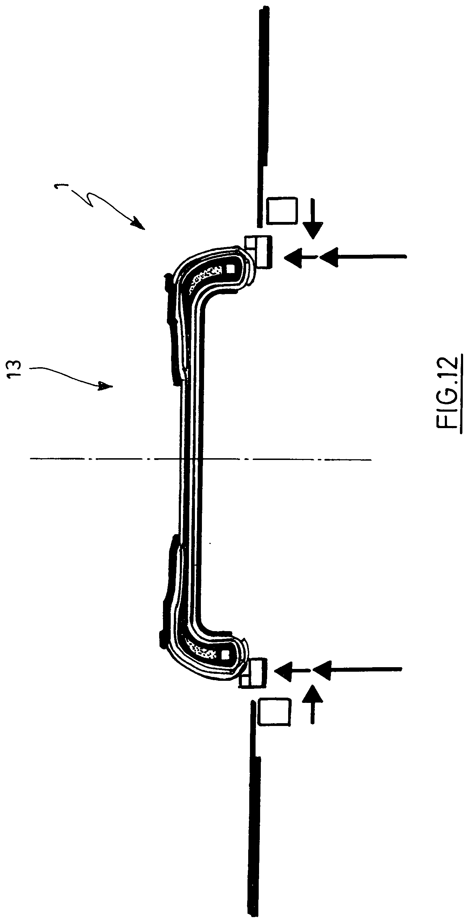

Gemäß dem in Fig. 12 dargestellten Prozessschritt expandiert die Kernfixierung (12) mit wenig Druck und die Trommelhälften (4, 5) verfahren in Richtung der Trommelmitte, um den Kern mit der äußeren Anlagekante der Kernfixierung (12) festzusetzen. Die Kernfixierung (12) expandiert dann mit hohem Druck, um den Kern vollständig zu fixieren.

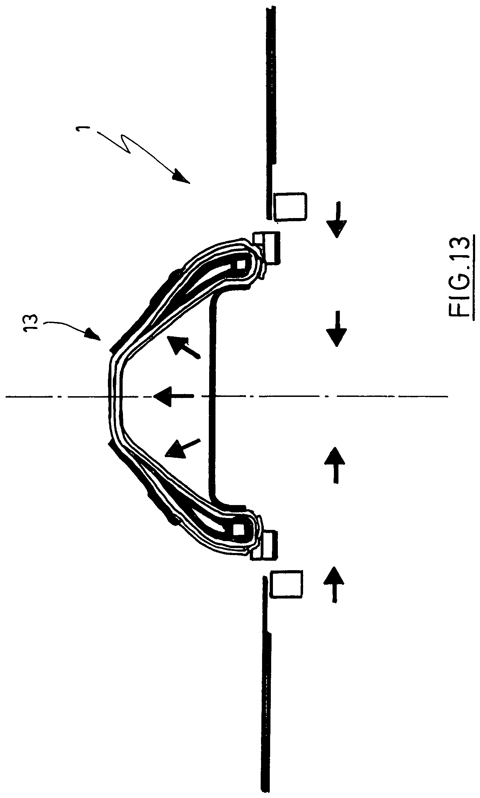

Gemäß dem in Fig. 13 dargestellten Prozessschritt wird das komplett fixierte Karkasspaket mit Druck beaufschlagt und hebt sich in der Mitte an. Parallel zu diesem Ablauf fahren die Trommelhälften (4, 5) und die Center-Vorrichtung (9, 10) zusammen. Durch den zu jedem Prozesszeitpunkt definierten Abstand zwischen den Kernen ist eine hervorragende Gleichförmigkeit der Reifen zu erreichen. Ebenfalls trägt zu dieser Gleichförmigkeit bei, dass der Kern während des gesamten Prozesses unterstützt ist.

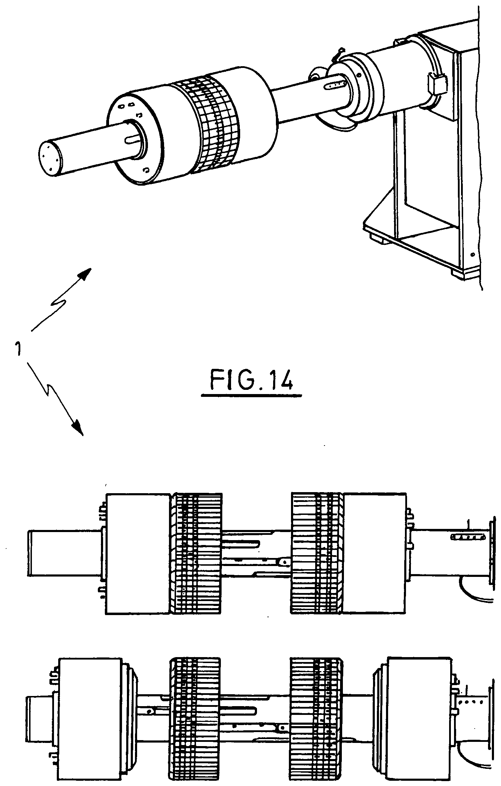

Fig. 14 zeigt zur Verdeutlichung weitere Ansichten der Reifenaufbautrommel (1) in unterschiedlichen Positionierungen der Einzelteile.

## Patentansprüche

1. Verfahren zur Herstellung eines Reifenrohlings, bei dem mindestens zwei streifenförmige Materialien auf einer Reifenaufbautrommel positioniert werden und bei dem mindestens zwei Kerne gesetzt werden sowie bei dem die Reifenaufbautrommel sowohl mit einer Kernklemmung (11) als auch mit einer Kernfixierung (12) versehen wird, wobei die Reifenaufbautrommel (1) aus einem Mittelteil (7, 8) und zwei beidseitig neben dem Mittelteil (7, 8) angeordneten Trommelhälften (4, 5) ausgebildet wird, wobei die Trommelhälften (4, 5) in einer axialen Richtung positionierbar sind und wobei das Mittelteil (7, 8) in einer radialen Richtung (6) mit einem veränderlichen Durchmesser versehen wird und wobei die Trommelhälften (4, 5) sowie eine Center-Vorrichtung (9, 10) zur Ausbildung eines Freiraumes positionierbar sind, wobei die Kernfixierung (12) vor einem Setzen der Kerne expandiert wird und die Center-Vorrichtung (9, 10) nach außen hebt, so dass die Materialien durch das Ausfahren der Center-Vorrichtung (9, 10) vorgespannt werden, wobei die Kerne nach deren Setzen durch die expandierende Kernklemmung (11) von unter geklemmt werden, wobei die Kerne durch ein Expandieren der Kernfixierung (12) vollständig fixiert werden, bevor das komplette Karkasspaket mit Druck beaufschlagt wird und sich in der Mitte anhebt.

2. Verfahren nach Anspruch 1, **dadurch gekennzeichnet, dass** eine radiale Durchmesservergrößerung des Mittelteils (7, 8) vor einem Setzen der Kerne durchgeführt wird.

3. Vorrichtung zur Herstellung eines Reifenrohlings, bei der mindestens zwei streifenförmige Materialien auf einer Reifenaufbautrommel positioniert werden und bei der mindestens zwei Kerne gesetzt werden sowie bei dem die Reifenaufbautrommel sowohl mit einer Kernklemmung (11) als auch mit einer Kernfixierung (12) versehen wird, wobei die Reifenaufbautrommel (1) aus einem Mittelteil (7, 8) und zwei beidseitig neben dem Mittelteil (7, 8) angeordneten Trommelhälften (4, 5) ausgebildet ist, wobei die Trommelhälften (4, 5) in einer axialen Richtung positionierbar sind und wobei das Mittelteil (7, 8) in einer radialen Richtung (6) mit einem veränderlichen Durchmesser versehen ist und wobei die Trommelhälften (4, 5) sowie eine, zwischen den Trommelhälften (4,5) angeordnete Center-Vorrichtung (9, 10) zur Ausbildung eines Freiraumes positionierbar sind, wobei die Kernfixierung (12) vor einem Setzen der Kerne expandiert wird und die Center-Vorrichtung (9, 10) nach außen hebt, sodass die Materialien durch das Ausfahren der Center-Vorrichtung (9, 10) vorgespannt werden, wobei die Kerne nach deren Setzen durch die expandierende Kernklemmung (11) von unter geklemmt werden, wobei die Kerne durch ein Expandieren der Kernfixierung (12) vollständig fixiert werden, bevor das komplette Karkasspaket mit Druck beaufschlagt wird und sich in der Mitte anhebt.

4. Vorrichtung nach Anspruch 3, **dadurch gekennzeichnet, dass** eine radiale Durchmesservergrößerung des Mittelteils (7, 8) vor einem Setzen der Kerne durchführbar ist.

5. Vorrichtung nach Anspruch 3 oder 4, **dadurch gekennzeichnet, dass** die Trommelhälften (4, 5) unabhängig voneinander positionierbar sind.

6. Vorrichtung nach einem der Ansprüche 3 bis 5, **dadurch gekennzeichnet, dass** mindestens ein Kernsetzer in einer axialen Richtung positionierbar ist.

7. Vorrichtung nach einem der Ansprüche 3 bis 6, **dadurch gekennzeichnet, dass** der Kernsetzer in einer axialen Richtung gegenüber einem expandierten Mittelteil (7, 8) verspannbar ist.

8. Vorrichtung nach einem der Ansprüche 3 bis 7, **dadurch gekennzeichnet, dass** eine Kernfixierung (12) wahlweise mit einem geringeren oder einem höheren Druck expandierbar ist.

9. Vorrichtung nach einem der Ansprüche 3 bis 8, **dadurch gekennzeichnet, dass** eine Kernklemmung (11) und eine Kernfixierung (12) unabhängig voneinander positionierbar sind.

10. Vorrichtung nach einem der Ansprüche 3 bis 9, **dadurch gekennzeichnet, dass** die Kernfixierung (12) als eine Außenschulter ausgebildet ist.

11. Vorrichtung nach einem der Ansprüche 3 bis 10, **dadurch gekennzeichnet, dass** die Center-Vorrichtung (9, 10) ohne die Trommelhälften (4, 5) in einer expandierten Stellung positionierbar ist.

## Claims

1. Method for producing a green tyre, in which method at least two materials in strip form are positioned on a tyre building drum, and in which method at least two cores are set in place, and also in which method the tyre building drum is equipped both with a core clamping means (11) and with a core fixing means (12), wherein the tyre building drum (1) is formed from a central part (7, 8) and from two drum halves (4, 5) arranged adjacent to the central part (7, 8) on both sides, wherein the drum halves (4, 5) can be positioned in an axial direction, and wherein the central part (7, 8) is equipped with a variable diameter in a radial direction (6), and wherein the drum halves (4, 5) and a centre device (9, 10) can be positioned so as to form a free space, wherein, before the cores are set in place, the core fixing means (12) is expanded and lifts the centre device (9, 10) outwards, such that the materials are prestressed by virtue of the centre device (9, 10) being deployed, wherein, after being set in place, the cores are clamped from below by the expanding core clamping means (11), wherein the cores are fully fixed as a result of an expansion of the core fixing means (12) before the entyre carcass assembly is subjected to pressure and rises in the centre.

2. Method according to Claim 1, **characterized in that** a radial enlargement of the diameter of the central part (7, 8) is performed before the cores are set in place.

3. Device for producing a green tyre, in which device at least two materials in strip form are positioned on a tyre building drum, and in which device at least two cores are set in place, and also in which device the tyre building drum is equipped both with a core clamping means (11) and with a core fixing means (12), wherein the tyre building drum (1) is formed from a central part (7, 8) and from two drum halves (4, 5) arranged adjacent to the central part (7, 8) on both sides, wherein the drum halves (4, 5) can be positioned in an axial direction, and wherein the central part (7, 8) is equipped with a variable diameter in a radial direction (6), and wherein the drum halves (4, 5) and a centre device (9, 10) arranged between the drum halves (4, 5) can be positioned so as to form a free space, wherein, before the cores are set in place, the core fixing means (12) is expanded and lifts the centre device (9, 10) outwards, such that the materials are prestressed by virtue of the centre device (9, 10) being deployed, wherein, after being set in place, the cores are clamped from below by the expanding core clamping means (11), wherein the cores are fully fixed as a result of an expansion of the core fixing means (12) before the entyre carcass assembly is subjected to pressure and rises in the centre.

4. Device according to Claim 3, **characterized in that** a radial enlargement of the diameter of the central part (7, 8) can be performed before the cores are set in place.

5. Device according to Claim 3 or 4, **characterized in that** the drum halves (4, 5) can be positioned independently of one another.

6. Device according to one of Claims 3 to 5, **characterized in that** at least one core setting means can be positioned in an axial direction.

7. Device according to one of Claims 3 to 6, **characterized in that** the core setting means can be braced in an axial direction relative to an expanded central part (7, 8).

8. Device according to one of Claims 3 to 7, **characterized in that** a core fixing means (12) can be expanded optionally by means of a relatively low pressure or a relatively high pressure.

9. Device according to one of Claims 3 to 8, **characterized in that** a core clamping means (11) and a core fixing means (12) can be positioned independently of one another.

10. Device according to one of Claims 3 to 9, **characterized in that** the core fixing means (12) is in the form of an external shoulder.

11. Device according to one of Claims 3 to 10, **characterized in that** the centre device (9, 10) can be positioned in an expanded position without the drum halves (4, 5).

## Revendications

1. Procédé permettant la fabrication d'un pneumatique cru, procédé selon lequel au moins deux matériaux en forme de bande sont positionnés sur un tambour de confection de pneumatiques, selon lequel au moins deux noyaux sont placés et selon lequel le tambour de confection de pneumatiques est doté à la fois d'un dispositif de serrage de noyaux (11) et d'un dispositif de fixation de noyaux (12), le tambour de confection de pneumatiques (1) étant formé à partir d'une partie centrale (7, 8) et de deux moitiés de tambour (4, 5) disposées de part et d'autre de la partie centrale (7, 8) près de celle-ci, les moitiés de tambour (4, 5) pouvant être positionnées dans une direction axiale et la partie centrale (7, 8) présentant un diamètre variable dans une direction radiale (6), et les moitiés de tambour (4, 5) ainsi qu'un dispositif de centrage (9, 10) pouvant être positionnés pour former un espace libre, le dispositif de fixation de noyaux (12) étant dilaté avant un placement des noyaux et soulevant le dispositif de centrage (9, 10) vers l'extérieur, de telle sorte que les matériaux soient précontraints par le déploiement du dispositif de centrage (9, 10), les noyaux étant, après leur placement, serrés par le bas au moyen du dispositif de serrage de noyaux (11) dilaté, les noyaux étant fixés complètement par une dilatation du dispositif de fixation de noyaux (12) avant que l'ensemble carcasse complet ne soit soumis à une pression et ne se soulève au milieu.

2. Procédé selon la revendication 1, **caractérisé en ce qu'**une augmentation radiale de diamètre de la partie centrale (7, 8) est effectuée avant un placement des noyaux.

3. Dispositif permettant la fabrication d'un pneumatique cru, dans lequel au moins deux matériaux en forme de bande sont positionnés sur un tambour de confection de pneumatiques, dans lequel au moins deux noyaux sont placés et dans lequel le tambour de confection de pneumatiques est doté à la fois d'un dispositif de serrage de noyaux (11) et d'un dispositif de fixation de noyaux (12), le tambour de confection de pneumatiques (1) étant formé à partir d'une partie centrale (7, 8) et de deux moitiés de tambour (4, 5) disposées de part et d'autre de la partie centrale (7, 8) près de celle-ci, les moitiés de tambour (4, 5) pouvant être positionnées dans une direction axiale et la partie centrale (7, 8) présentant un diamètre variable dans une direction radiale (6), et les moitiés de tambour (4, 5) ainsi qu'un dispositif de centrage (9, 10) disposé entre les moitiés de tambour (4, 5) pouvant être positionnés pour former un espace libre, le dispositif de fixation de noyaux (12) étant dilaté avant un placement des noyaux et soulevant le dispositif de centrage (9, 10) vers l'extérieur, de telle sorte que les matériaux soient précontraints par le déploiement du dispositif de centrage (9, 10), les noyaux étant, après leur placement, serrés par le bas au moyen du dispositif de serrage de noyaux (11) dilaté, les noyaux étant fixés complètement par une dilatation du dispositif de fixation de noyaux (12) avant que l'ensemble carcasse complet ne soit soumis à une pression et ne se soulève au milieu.

4. Dispositif selon la revendication 3, **caractérisé en ce qu'**une augmentation radiale de diamètre de la partie centrale (7, 8) peut être effectuée avant un placement des noyaux.

5. Dispositif selon la revendication 3 ou 4, **caractérisé en ce que** les moitiés de tambour (4, 5) peuvent être positionnées indépendamment l'une de l'autre.

6. Dispositif selon l'une quelconque des revendications 3 à 5, **caractérisé en ce qu'**au moins un élément de placement de noyaux peut être positionné dans une direction axiale.

7. Dispositif selon l'une quelconque des revendications 3 à 6, **caractérisé en ce que** l'élément de placement de noyaux peut être serré dans la direction axiale par rapport à une partie centrale (7, 8) dilatée.

8. Dispositif selon l'une quelconque des revendications 3 à 7, **caractérisé en ce qu'**un dispositif de fixation de noyaux (12) peut être dilaté sélectivement à l'aide d'une pression plus faible ou plus élevée.

9. Dispositif selon l'une quelconque des revendications 3 à 8, **caractérisé en ce qu'**un dispositif de serrage de noyaux (11) et un dispositif de fixation de noyaux (12) peuvent être positionnés indépendamment l'un de l'autre.

10. Dispositif selon l'une quelconque des revendications 3 à 9, **caractérisé en ce que** le dispositif de fixation de noyaux (12) est réalisé sous la forme d'un épaulement extérieur.

11. Dispositif selon l'une quelconque des revendications 3 à 10, **caractérisé en ce que** le dispositif de centrage (9, 10) peut être positionné sans les moitiés de tambour (4, 5) dans une position dilatée.
